# EUROPEAN PATENT APPLICATION

(11) **EP 3 217 720 A1**
(43) Date of publication of application: **13.09.2017**
(21) Application number: 16290046.8
(22) Date of filing: 11.03.2016
(51) Int. Cl.: H04W 36/00, H04W 36/02, H04W 76/02, H04W 84/04, H04W 84/08, H04W 88/08, H04W 88/12

(54) **METHOD AND APPARATUSES FOR FASTER CONNECTION RECOVERY IN A WIRELESS COMMUNICATION SYSTEM**

(71) Applicant: ALCATEL LUCENT, 92100 Boulogne-Billancourt (FR)
(72) Inventor: Aziz, Danish, 70435 Stuttgart (DE); Ambrosy, Anton, 70435 Stuttgart (DE); Halbauer, Hardy, 70435 Stuttgart (DE); Bakker, Hajo, 70435 Stuttgart (DE); Gebert, Jens, 70435 Stuttgart (DE); Braun, Volker, 70435 Stuttgart (DE)
(74) Representative: DREISS Patentanwälte PartG mbB

(57) **Abstract**

A method and corresponding devices for wireless data transmission the method comprising:
configuring at least one first high-band radio access point (131, 132, 133) of a plurality of predetermined high-band radio access points for wireless data transmission to a user equipment (140),
transmitting data addressed to said user equipment (140) via said at least one first high-band radio access point (131, 132, 133),
selecting at least one second high-band radio access point (131, 132, 133) other than said at least one first high-band radio access point (131, 132, 133) from the plurality of predetermined high-band radio access points,
configuring said at least one second high-band radio access point (131, 132, 133) to hold available information about said user equipment (140) during data transmission between said user equipment (140) and said at least one first high-band radio access point (131, 132, 133).

## Description

### Field of the invention

The invention concerns a method and device for wireless data transmission.

### Background

In a radio access network base stations provide wireless connectivity to user equipment in a coverage area.

In a radio access network base stations and user equipment operate for example according to the long term evolution standard or the long term evolution advanced standard or the upcoming 5G standard. This way the radio access network provides low-band coverage.

Millimeter wave radio access points or other high-band radio access points and compatible user equipment may be used in a radio access network for capacity enhancement, i.e. higher data rates. They operate with radio signals in a millimeter wave frequency band, i.e. within the band of radio frequencies in the electromagnetic spectrum from 30 to 300 gigahertz. High data throughput is achievable by millimeter wave radio transmission. In general any high-band radio access point operating with frequencies larger than 6 gigahertz may be used.

Due to obstructions in the coverage area of high-band radio access points, the data transmission quality may suffer. This may result in that low-band nodes can only use a limited bandwidth (capacity), which allows only "low" data rates. Millimeter wave radio access points can use high bandwidth which allows very high data rates. There will be obstructions for high-band waves radio access points and not for low-band nodes.

Many high-band radio access points may be deployed within the coverage area of a base station. In this scenario, the base station provides low-band coverage to the user equipment additionally to the coverage provided by the high-band radio access points.

When the user equipment moves relative to the high-band radio access point or there are changes in the environment, e.g. a truck blocks the data transmission, it may lose the coverage area of that high-band radio access point or the Line Of Sight between user equipment and high-band radio access point is blocked for a certain time. A handover of the user equipment to another high-band radio access point may provide reliable wireless data transmission in this case.

Likewise a handover of the user equipment to another base station may provide reliable wireless data transmission in case the user equipment leaves the low-band coverage area of the base station.

Due to the propagation characteristics of high-band millimeter wave radio signals, link blockage may appear in the link between an user equipment and a millimeter wave radio point suddenly due to obstruction in one or all possible paths between a high-band access point and the user equipment. This blockage may cause high interruption times.

### Summary

It is therefore an objective of the present invention to provide a reliable transmission of data via high-band radio connection. This then enables data transmission at high data rates.

This goal is achieved by a method for wireless data transmission comprising:
configuring at least one first high-band radio access point of a plurality of predetermined high-band radio access points for wireless data transmission to a user equipment,
transmitting data addressed to said user equipment via said at least one first high-band radio access point,
selecting at least one second high-band radio access point other than said at least one first high-band radio access point from the plurality of predetermined high-band radio access points,
configuring said at least one second high-band access point to hold available information about said user equipment during data transmission between said user equipment and said at least one first high-band radio access point.

Preferably the method comprises:
configuring said at least one second high-band radio access point to establish a wireless data link with said user equipment using the information held available by said at least one second high-band radio access point. This reduces delay caused by otherwise required enquiries for information about user equipment.

Preferably the method comprises:
configuring said at least one second high-band radio access point to hold available data addressed to said user equipment. This reduces delay caused by otherwise required requests for data.

Preferably the method comprises:
receiving said data, addressed to said user equipment, by said at least one second high-band radio access point, holding available said data and forwarding said data to said user equipment or not, depending on a current configuration of said at least one second high-band radio access point. This provides capacity enhancement or better reliability.

The invention concerns a network node and a high-band access point, operable to interact by the method as well
Further developments of the invention can be gathered from the dependent claims and the following description.

### Brief description of the figures

Figure 1 schematically depicts part of a radio access network,
Figure 2 schematically depicts part of a signal path according to a first configuration in an exemplary architecture of a radio access network,
Figure 3 schematically depicts part of a signal path according to a second configuration in an exemplary architecture of a radio access network,
Figure 4 schematically depicts part of a signal path according to a third configuration in an exemplary architecture of a radio access network.

### Description of the embodiments

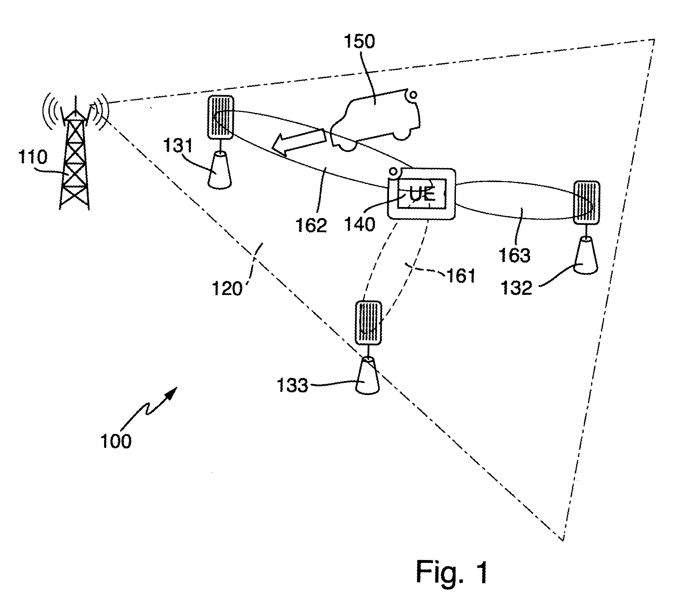

Figure 1 schematically depicts part of a radio access network 100. The radio access network 100 provides multi-connectivity with multiple radio access technologies.

A network node 110, for example an evolved node B or a future 5G node, referred to as eNB below, provides a low-band connectivity according to one of the aforementioned standards in a coverage area 120. The network node 110 is for example a base station 110 configured as eNB according to the long term evolution standard or the upcoming 5G standard.

A plurality of high-band radio access points 131, 132, 133, preferable millimeter wave radio access points or access points operating above 6 GHz, provide radio access in respective coverage areas 161, 162, 163 that overlap at least temporarily, at least partially with the coverage area 120. Each high-band access point may provide a certain number of dedicated beams.

The plurality of high-band radio access points 131, 132, 133 and the network node 110 are adapted to exchange data and access points related control messages, e.g. via Xn interfaces (not depicted), for specific user equipment.

User related control messages can be sent by the network node 110 to user equipment 140 directly or to user equipment 140 via any of the high-band radio access points 131, 132, 133.

User equipment 140 is configurable to receive data via a wireless link provided by the network node 110 and/or any of the plurality of high-band radio access points 131, 132, 133 respectively.

In the example user equipment 140 is configured to permanently receive data via either of the wireless links.

One goal of multi-connectivity is to achieve high data throughput and faster handover. Connectivity with multiple radio access technologies is an essential part of this multi-connectivity.

The integration of high-band radio access technology in a multi-connectivity framework of the radio access network 100 improves the data throughput. The high-band radio access points 131, 132, 133 are in the example configured to ensure the delivery of high data rates to user equipment 140.

Possible paths for the radio signals are line of sight paths or non-line of sight paths between base station 110, high-band radio access points 131, 132, 133 and user equipment 140.

In an urban environment a high-band radio channel is generally characterized by a low number of possible paths. From any possible paths between high-band radio access points 131, 132, 133 and user equipment 140 in most cases probably only one path will be used for transmission with high gain, narrow half-power beam width antenna beams. Due to the propagation characteristics of high-band waves, in particular millimeter waves, link blockage may appear due to obstruction in a line of sight or non-line of sight connection between any high-band radio access point 131, 132, 133 and user equipment 140.

This means that transmission quality is sensitive to blocking effects. This blockage may cause high interruption times. Therefore reliability of the data transmission is eventually poor.

A blocking effect can occur if an obstacle 150 is in the transmission path. In the example of figure 1 the obstacle 150 is a vehicle that moves into the coverage area 162. This may lead to blocking at a line of sight transmission path between the high-band radio access point 131 and user equipment 140.

Thereby in the example the data transmission via high-band radio access point 131 suddenly fails.

Blockage may as well be caused by sudden user movement, i.e. sudden movement of the user equipment 140, relative to the serving high-band radio access point 131.

To mitigate this effect, e.g. to minimize interruption times or ideally even avoid interruptions, redundant coverage of high-band radio access points 131, 132, 133 are provisioned as described below.

The transmission of data via the high-band radio access points 131, 132, 133 is in the example supported by the low-band node with a larger coverage area 120.

This means data, that is transmitted by a high-band radio access point 131, 132, 133, is in the example received from the base station 110. This data can be received from any other network entity as well, e.g. from a central server that is connected to the high-band radio access points 131, 132, 133.

On a network deployment as depicted in Figure 1, due to high reliability requirement, the network node 110 is operable as controlling entity to configure the high-band radio access points 131, 132, 133 according to the method described below. The network node 110 may for example be located in the edge cloud or core network as well. In the example base station 110 is configured as controlling entity.

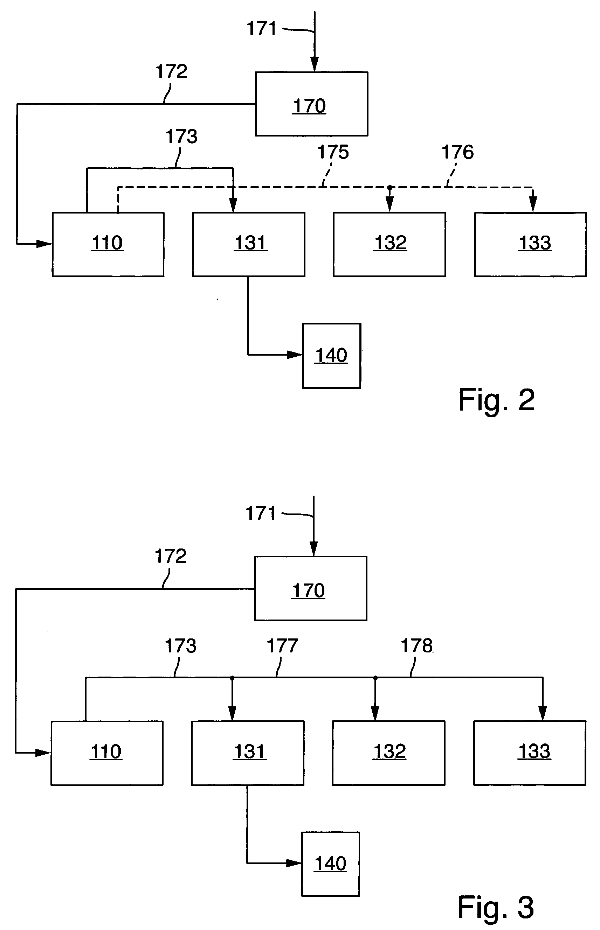

A method to configure and manage a user equipment centric optimum cluster of high-band radio access points is described below referencing figures 2, 3 and 4.

In a dynamic environment where high-band links could be blocked due to user equipment movements, mobility or the changes in the environment it is required that the nodes in the cluster, especially the high-band radio access points 131, 132, 133, are prepared and able to serve the user equipment 140 as long as it remains in their coverage area. Efficient management of data distribution, the configuration of user equipment 140 and the controlling of high-band radio access points 131, 132, 133 in the cluster are provided by this method.

The high-band radio access points 131, 132, 133 are network nodes that are controlled by the controlling entity e.g. basis station 110, to manage the high-band radio access points 131, 132, 133 in a serving cluster such that the following classifications of high-band radio access points 131, 132, 133 can be differentiated:

### Serving State:

A high-band radio access point 131, 132, 133 in Serving State is characterized as the access point which receives the context of user equipment 140 and the data from the controlling entity, e.g. base station 110. In addition the data is transmitted towards user equipment 140. The received from the controlling entity is for example user data.

### Context and Data Prepared State:

The high-band radio access point 131, 132, 133 in Context and Data Prepared State receives the context of user equipment 140 and the data from the controlling entity, e.g. base station 110. This means that the high-band radio access point 131, 132, 133 in this state is aware of the presence of the user equipment 140.

Additionally the high-band radio access point 131, 132, 133 in this state holds available data for user equipment 140 in a buffer. This means data for user equipment 140 is received by the high-band radio access point 131, 132, 133, e.g. from base station 110, and stored in the buffer. However, high-band radio access point 131, 132, 133 is not engaged in the transmission of data to user equipment 140.

### Context Prepared State:

The high-band radio access point 131, 132, 133 in Context Prepared State receives only the context of the user equipment from the controlling entity. This means that the high-band radio access point 131, 132, 133 in this state is aware of the presence of the user equipment 140 and prepared for a fast radio link establishment to the user equipment 140.

The controlling entity, e.g. base station 110, in the example bears the control protocol instance for the targeted user equipment 140.

The above classification of the states can be applied to any node engaged in the multi-connectivity framework. The different states are associated with different activity levels of the nodes. According to this, each node involved in multi-connectivity for a given bearer of user equipment 140 is configured in one of the states.

The three main attributes by which each state can differ from others are:
1 User equipment context
2 Data in the buffer
3 Active in transmission of user data towards user equipment 140

These states and the attributes can be set and modified based on the service requirements and the radio conditions of user equipment 140 either by the controlling entity, e.g. base station 110, or by the node itself, e.g. in case of forward handover of the involved user equipment 140. These states and the attributes can also be set and modified if link quality between access point and user equipment 140, changes or if required radio resource capabilities in the high-band radio access point 131, 132, 133 are too low.

In the example, the serving cluster consists of base station 110 and of high-band radio access points 131, 132, 133 within the coverage area 120 of base station 110. It is assumed, that the high-band radio access points 131, 132, 133 are using the same high carrier frequency and bandwidth. Different frequency or bandwidth may be used as well.

A method for wireless data transmission starts, for example, whenever user equipment 140 connects to any of the high-band radio access point 131, 132, 133. If the high-band radio access point 131, 132, 133 is in Context and Data Prepared State, context information and data are already available. If data is not available, e.g. in Context Prepared State, data must be requested by high-band radio access point 131, 132, 133 from base station 110. This is for example reported by the respective high-band radio access point 131, 132, 133 via a notification message sent to the controlling entity, e.g. the base station 110. Alternatively, the user equipment 140 informs the controlling entity, e.g. the base station 110, that an access to one of the wave radio access point 131, 132, 133 is possible and the controlling entity, e.g. the base station 110, instructs the user equipment to connect to one of the high-band radio access points.

In one example the controlling entity, e.g. the base station 110, forwards data according to the packet data convergence protocol, well known as PDCP, towards a single high-band radio access points 131. This single high-band radio access point 131 transmits this data to user equipment 140.

Figure 2 illustrates an exemplary architecture where high-band radio access points 131, 132, 133 are selected by the controlling entity, e.g. the base station 110, to be in the configured serving cluster. Download data 171 enters the radio access network 100 via a core unit 170 and is received by the base station 110 via a data link 172 from the core unit 170.

The controlling entity is the base station 110. The controlling is done with the help of the radio resource control protocol, well known as RRC protocol.

This serving cluster could be a subset of nodes that are candidate access points which are:
1 measured and reported by user equipment 140, or
2 selected by the base station 110 based on some historical, anticipatory or geo-location based algorithm or other configuration information.

The base station 110 prepares all three high-band radio access points 131, 132, 133, however in the example with different states.

In an exemplary embodiment, base station 110 is configured as master evolved node B, and the high-band radio access points 131, 132, 133 are configured as small cell or secondary evolved node B. In this case, an information element regarding provisioning the state(s) may be added to X2-messages exchanged between the master evolved node B and the small cell or secondary evolved node B based on 3GPP TS 36.300 V13.1.0 (2015-09). The information element may be added into existing X2-messages. It is also possible to provision the state(s) using different mechanisms, e.g. a (new) separate message dedicated to such provisioning.

The information element is, in an example, including a modifiable state parameter. The modifiable state parameter may have, for example, as value a string of "Context Prepared State", "Context and Data Prepared State" or "Serving State".

The corresponding messages may be exchanged during addition of a small cell or secondary evolved node B to the serving cluster. The corresponding messages may also be exchanged during any modification of a small cell or secondary evolved node B that is already in the serving cluster.

The small cell or secondary evolved node B may be configured to receive and acknowledge corresponding messages.

High-band radio access point 131 is assigned to be in Serving State. It functions as the initial serving node based on a measurement report by user equipment 140 towards the base station 110, so it will be configured by base station 110 for this dedicated user equipment 140 and will receive forwarded PDCP data via a data link 173 from base station 110 which will be transmitted to the user equipment 140.

High-band radio access points 132, 133 are in Context Prepared State, selected as nodes which are prepared and hold only the user equipment context. User equipment context is for example information about air interface related identification, transport network layer address information corresponding to bearer type, user equipment capability, candidate state information. However, no data addressed to the user equipment 140 will be transferred to the high-band radio access points 132, 133.

This means that at least one high-band radio access point 131, 132, 133 is selected from a plurality of predetermined high-band radio access points 131, 132, 133. The cluster is preferably formed by high-band radio access points 131, 132, 133 having coverage areas 161, 162, 163 that overlap at least partially with the coverage area 120 of the base station 110. There may be more coverage areas for each high-band radio access point 131, 132, 133 (not depicted). This means that there may be more beams around each high-band radio access point 131, 132, 133.

This means that to provide redundant coverage, multiple high-band radio access points 131, 132, 133 and the base station 110 for low-band coverage, build the serving cluster. User equipment 140 is within reach of at least one of the high-band radio access points 131, 132, 133 of the serving cluster, as depicted in figure 1. The user equipment 140 can be served by at least one of the high-band radio access points 131, 132, 133 out of the serving cluster at a time. In the example of figure 1 high-band radio access points 131 is selected to serve user equipment 140.

According to the example of figure 2, data is transmitted to the user equipment 140 by the selected high-band radio access points 131 as serving high-band radio access point. This means that in this case high-band radio access point 131 has already received context of user equipment 140. The resulting data path 172, 173 for the data flow between the radio access network and the user equipment 140 is depicted in figure 2 as solid line. Dashed lines indicate possible data paths 175, 176. The data paths 175, 176 are currently not used for data transmission between the radio access network and the user equipment 140. The dashed lines of data paths 175, 176 indicate the path for context sharing between base station 110 and not serving high-band radio access points 132, 133.

A test may be performed to determine whether the connection between the serving high-band radio access point 131 and user equipment 140 is available or not.

This test can be executed by the user equipment 140, the serving high-band radio access point 131 or the controlling entity, e.g. base station 110.

In case the connection is available and the link quality is sufficient data transmission continues.

If the connection to the serving high-band radio access point 131 is blocked by obstacle 150, user equipment 140 does not receive data from the serving high-band radio access point 131.

Upon detection that the data transmission has stopped, the user equipment 140 has to connect to another high-band radio access point 132, 133 serving the coverage area 120 of the base station 110 from another direction for continuing transmission of high data rate.

However, during the time required to perform the reconnection, i.e. the handover, the transfer of data to user equipment 140 is interrupted until one of the other high-band radio access points 132 or 133 takes over the transmission of data.

To minimize the time of interruption, the high-band radio access points 131, 132, 133 are operable to store the data, received and addressed for user equipment 140, in the buffer.

Considering the situation where high-band radio access point 132 has a link quality to user equipment 140 that becomes better than the link quality between the serving high-band radio access point 131 and user equipment 140. When user equipment 140 reports this to the base station 110 a standard handover procedure can be performed. This is well known as backward handover.

Additionally to this procedure, base station 110 will change the state of high-band radio access point 132 from Context Prepared State to Serving State. The state of the high-band radio access point 131 is changed by base station 110 from Serving State either to Context Prepared State or Context and Data Prepared State.

In another option, the user equipment 140 is allowed to contact high-band radio access point 132 if its link is detected as better than the link to serving high-band radio access point 131. This is well known as forward handover. Additionally as high-band radio access point 132 is already in Context Prepared State and contains the context information for user equipment 140, it will accept the request of user equipment 140 and request the base station 110 for data addressed to the user equipment 140.

As a result, base station 110 can modify the state of high-band radio access point 132 from Context Prepared State to Serving State in case of either backward handover or forward handover. In case of forward handover high-band radio access point 132 can change its state from Context Prepared State to Serving State and send a modification message to base station 110.

On the other hand the state of high-band radio access point 131 could be changed from Serving State either to Context Prepared State or Context and Data Prepared State.

Either during backward or forward handover, the interruption time is minimized by this additional configuration that prepares the high-band radio access points 132, 133.

In another example, base station 110 forwards the PDCP data towards all high-band radio access points 131, 132, 133 and a single high-band radio access point 131 transmits data to user equipment 140. This is depicted in figure 3. The elements that have the same functionality in figure 3 as was described for figure 2 are labelled identically in figure 3.

Figure 3 illustrates an exemplary architecture where high-band radio access points 131, 132, 133 are selected by the base station 110 to be in the configured serving cluster. Base station 110 prepares all three high-band radio access points 131, 132, 133 however with different states.

High-band radio access point 131 is selected to be in Serving State as the initial serving node based on the measurement report from the user equipment 140 towards base station 110. High-band radio access point 131 is configured by the base station 110 for this dedicated user equipment 140 and will receive forwarded PDCP data from the base station 110 which will be transmitted to the user equipment 140.

High-band radio access point 132 and 133 are selected to be in Context and Data Prepared State. They will get the user equipment context information, e.g. air interface related identification, transport network layer address information corresponding to bearer type, user equipment capability, measurement results, standby state information. Additionally forwarded PDCP data is sent to them via data link 177, 178. However, they will not transmit data to the user equipment 140 as long as they are in this state.

Considering the situation where high-band radio access point 132 has a link quality to user equipment 140 that becomes better than the link quality between the serving high-band radio access point 131 and user equipment 140. When user equipment 140 reports this to the base station 110 a standard handover procedure can be performed. This is well known as backward handover.

Additionally to this procedure, the state of high-band radio access point 132 will be changed by base station 110 from Context and Data Prepared State to the Serving State and it will immediately start transmitting data addressed to the user equipment 140 from the buffer to the user equipment 140.

The state of high-band radio access point 131 may be changed by base station 110 from Serving State either to Context Prepared State or Context and Data Prepared State.

The high-band radio access point 133 may still remain in Context and Data Prepared State.

In another option, user equipment 140 is allowed to contact high-band radio access point 132 if its link is detected as better than the link to high-band radio access point 131. This is well known as forward handover.

As high-band radio access point 132 is already in the Context and Data Prepared State and holds available in the buffer current data addressed to user equipment 140 it will accept the request of user equipment 140 and may take one of the actions or series of actions:
1 Change its status from Context and Data Prepared State to Serving State. Furthermore high-band radio access point 132 may inform the base station 110 about the change of the status and start transmitting the forwarded data to the user equipment 140.
2 Request the base station 110 to change the status from Context and Data Prepared State to Serving State. Furthermore high-band radio access point 132 may request the base station 110 for sequence number of packets to be transmitted and/or request for new data to be transmitted to user equipment 140.
3 User equipment 140 may inform the high-band radio access point 132 about the last received PDCP packet. If high-band radio access point 132 contains further packets then it can start transmitting immediately and in parallel modify the state in accordance with base station 110.

In any case, base station 110 may know the change of state of high-band radio access point 132 and may consequently change the state of high-band radio access point 131.

Either way the interruption of data transmission is minimized.

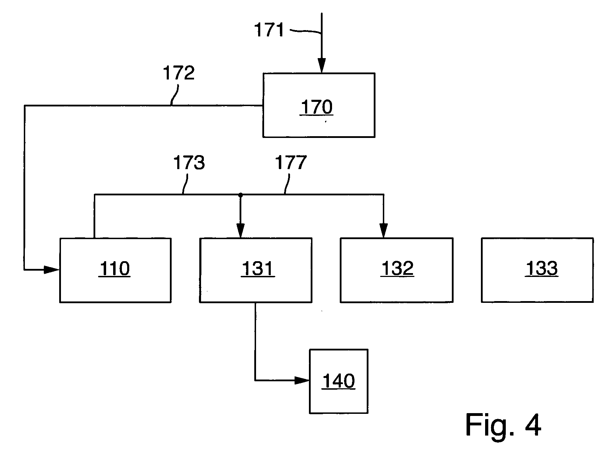

In another example, the base station 110 forwards PDCP data towards two high-band radio access points 131, 132 and a single high-band radio access point 131 transmits data to user equipment 140. This is depicted in figure 4. The elements that have the same functionality in figure 4 as was described for figure 2 or figure 3 are labelled identically in figure 4.

Figure 4 illustrates an exemplary architecture where high-band radio access points 131, 132, 133 are selected by the base station 110 to be in the configured serving cluster. Base station 110 prepares all three high-band radio access point 131, 132, 133, however with different states.

High-band radio access point 131 is selected to be in Serving State as the initial serving node based on the measurement report from the user equipment 140 towards base station 110. High-band radio access point 131 is configured by the base station for this dedicated user equipment 140 and will receive forwarded PDCP data from the base station 110 which will be transmitted to the user equipment 140.

High-band radio access point 132 is selected to be in Context and Data Prepared State. It will get the user equipment context information, e.g. air interface related identification, transport network layer address information corresponding to bearer type, user equipment capability, measurement results, standby state information and forwarded PDCP data. However, it will not transmit data to user equipment 140 as long as it is in this state.

High-band radio access point 133 selected to be in Context Prepared State as a node which is prepared to hold only the user equipment context information. However, no data will be transferred to it.

Considering the situation where high-band radio access point 132 has a link quality to user equipment 140 that becomes better than the link quality between the serving high-band radio access point 131 and user equipment 140. When user equipment 140 reports this to the base station 110 a standard handover procedure can be performed. This is well known as backward handover.

Additionally to this procedure, the state of high-band radio access point 132 will be changed by base station 110 from Context and Data Prepared State to the Serving State and it will immediately start transmitting data addressed to the user equipment 140 from the buffer to the user equipment 140.

The state of high-band radio access point 131 may be changed by base station 110 from Serving State either to Context Prepared State or Context and Data Prepared State.

The high-band radio access point 133 may still remain in Context Prepared State.

In another option, user equipment 140 is allowed to contact high-band radio access point 132 if its link is detected as better than the link to high-band radio access point 131. This is well known as forward handover.

As high-band radio access point 132 is already in the Context and Data Prepared State and holds available in the buffer current data addressed to user equipment 140, it will accept the request of the user equipment 140 and may take one of the actions or series of actions:
1 Change its status from Context and Data Prepared State to Serving State. Furthermore high-band radio access point 132 may inform the base station 110 about the change of the status and start transmitting the forwarded data to the user equipment 140.
2 Request the base station 110 to change the status from Context and Data Prepared State to Serving State. Furthermore high-band radio access point 132 may request the base station 110 for the sequence number of packets to be transmitted and/or request for new data to be transmitted to the user equipment 140.
3 The user equipment 140 may inform the high-band radio access point 132 about the last received PDCP packet. If high-band radio access point 132 contains further packets then it can start transmitting immediately and in parallel modify the state in accordance with base station 110.

In another option, user equipment 140 is allowed to contact the high-band radio access point 133 if its link quality is detected as better than the link quality to the high-band radio access point 131. This is well known as forward handover. As the high-band radio access point 133 is already in the Context Prepared State, it will accept the request of user equipment 140 and request the base station 110 for data addressed to the user equipment 140. As a result, base station 110 can modify the state of the high-band radio access point 133 from Context Prepared State to Serving State. On the other hand the state of the high-band radio access point 131 could be changed from Serving State either to Context Prepared State or Context and Data Prepared State.

In both, backward or forward handover, this minimizes the interruption time because the high-band radio access points 132, 133 are already prepared by the base station 110.

In the above embodiments the serving cluster with four nodes 131, 132, 133 and 110 was considered. However, it is not limited to this number in practice. Many more nodes may be in the serving cluster. Moreover, there can be multiple nodes in Serving State or Context and Data Prepared State or Context Prepared State. In addition to that, nodes can exit or enter into the cluster. Initially a node may be configured in any of the states when a node enters such a serving cluster.

A state of a high-band radio access point 131, 132, 133 may reference particular user equipment 140. This means that for different user equipment, the state of the same high-band radio access point 131, 132, 133 may be different. For example when the high-band radio access point 131 is in the Serving State for user equipment 140, it may be configured in Context Prepared State or Context and Data Prepared State for other user equipment.

This means that a corresponding method for wireless data transmission comprises:
configuring at least one first high-band radio access point 131, 132, 133 of a plurality of predetermined high-band radio access points for wireless data transmission to a user equipment 140,
transmitting data addressed to said user equipment 140 via said at least one first high-band radio access point 131, 132, 133,
selecting at least one second high-band radio access point 131, 132, 133 other than said at least one first high-band radio access point 131, 132, 133 from the plurality of predetermined high-band radio access points,
configuring said at least one second high-band access point 131, 132, 133 to hold available information about said user equipment 140 during data transmission between said user equipment 140 and said at least one first high-band radio access point 131, 132, 133.

Preferably configuring said at least one second high-band radio access point 131, 132, 133 to establish a wireless data link with said user equipment 140 using the information held available by said at least one second high-band radio access point 131, 132, 133.

Optionally, configuring said at least one second high-band radio access point 131, 132, 133 additionally to hold available data addressed to said user equipment 140.

In this case the data held available by said at least one second high-band radio access point 131, 132, 133 comprises a copy of data to be transmitted by said at least one first high-band radio access point 131, 132, 133 addressed to said user equipment 140.

This means that said data, addressed to said user equipment 140, is sent to said at least one first high-band radio access point 131, 132, 133 and said at least one second high-band radio access point 131, 132, 133, preferably by said base station 110.

Said data, addressed to said user equipment 140, is received by said at least one second high-band radio access point 131, 132, 133, held available and forwarded to said user equipment 140 or not, depending on a current configuration of said at least one second high-band radio access point 131, 132, 133.

The configuration is one of the Serving State, Context Prepared State or Context and Data Prepared State described above.

In the Context Prepared State, any second high-band radio access point 131, 132, 133 is configured to receive only information about the user equipment 140.

Preferably a request for establishing said wireless data link with and send data to said user equipment 140 is received. In forward handover or backward handover, the request is either sent by user equipment 140 or the base station 110 as described above.

This means that a network node, e.g. said base station 110, is operable to
configure at least one first high-band radio access point 131, 132, 133 of a plurality of high-band radio access points for wireless transmission of data addressed to a user equipment 140,
select at least one second high-band radio access point 131, 132, 133 other than said at least one first high-band radio access point 131, 132, 133 from the plurality of predetermined high-band radio access points,
configure said at least one second high-band radio access point 131, 132, 133 to hold available information about said user equipment 140 during data transmission between said user equipment 140 and said at least one first high-band radio access point 131, 132, 133.

Furthermore this means that a high-band radio access point is 131, 132, 133, operable to
be configured as at least one first high-band radio access point 131, 132, 133 of a plurality of predetermined high-band radio access points for wireless data transmission to a user equipment 140,
transmit data addressed to said user equipment 140 when configured as said at least one first high-band radio access point 131, 132, 133,
be configured as at least one second high-band radio access point 131, 132, 133 of the plurality of predetermined high-band radio access points, to hold available information about said user equipment 140 during data transmission between said user equipment 140 and another high-band radio access point 131, 132, 133 configured as said at least one first high-band radio access point 131, 132, 133.

To perform the respective steps, the network node, e.g. base station 110, and the high-band radio access points 131, 132, 133 may comprise hardware, e.g. a processor, storage and interfaces, and software adapted to execute the steps.

If a high-band radio access point 131, 132, 133 is configured in Context and Data Prepared State, outdated data stored in this node may be released, i.e. deleted from storage, upon successful reception of the respective data by the user equipment 140. The user equipment 140 may acknowledge the successful receipt for that purpose to the serving high-band radio access point 131, 132, 133. Serving high-band radio access point 131, 132, 133 can inform base station 110 on this acknowledgement and base station 110 is enabled to release these outdated data at high-band radio access point 131, 132, 133, which are in Context and Data Prepared State. Another possibility is that serving high-band radio access point 131, 132, 133 informs base station 110 and all other high-band radio access point 131, 132, 133 within the cluster. In any case outdated data may be released after a predetermined period of time or when the user equipment 140 is no longer within reach of the high-band radio access point 131, 132, 133. This way the respective buffer does not contain outdated data. This reduces the required buffer size.

This means that high-band radio access points 131, 132, 133 may transition from a first state to a second state, different from the first state, wherein the first state is selected from one of
- data transmission with user equipment;
- hold available information about said user equipment;
- hold available information about said user equipment and data addressed to said user equipment;
   wherein the second state is selected from one of
- data transmission with user equipment (140);
- hold available information about said user equipment;
- hold available information about said user equipment and data addressed to said user equipment (140).

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any sequence diagrams represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for wireless data transmission comprising:
configuring at least one first high-band radio access point (131, 132, 133) of a plurality of predetermined high-band radio access points for wireless data transmission to a user equipment (140),
transmitting data addressed to said user equipment (140) via said at least one first high-band radio access point (131, 132, 133),
selecting at least one second high-band radio access point (131, 132, 133) other than said at least one first high-band radio access point (131, 132, 133) from the plurality of predetermined high-band radio access points,
configuring said at least one second high-band access point (131, 132, 133) to hold available information about said user equipment (140) during data transmission between said user equipment (140) and said at least one first high-band radio access point (131, 132, 133).

2. The method according to claim 1 comprising:
configuring said at least one second high-band radio access point (131, 132, 133) for transmitting data addressed to said user equipment (140) via said at least one second high-band radio access point (131, 132, 133) to said user equipment (140).

3. The method according to claim 1 or 2 comprising:
configuring said at least one second high-band radio access point (131, 132, 133) to hold available information about said user equipment (140) and to hold available data addressed to said user equipment (140).

4. The method according to claim 3 wherein the data held available by said at least one second high-band radio access point (131, 132, 133) comprises a copy of data to be transmitted by said at least one first high-band radio access point (131, 132, 133) addressed to said user equipment (140).

5. The method according to any of claims 1 to 4 comprising:
sending said data, addressed to said user equipment (140), to said at least one first high-band radio access point (131, 132, 133) and said at least one second high-band radio access point (131, 132, 133).

6. The method according to any of claims 1 to 5 comprising:
receiving said data, addressed to said user equipment (140), by said at least one second high-band radio access point (131, 132, 133), holding available said data and forwarding said data to said user equipment (140) or not, depending on a current configuration of said at least one second high-band radio access point (131, 132, 133).

7. The method according to any of claims 1 to 6 comprising:
configuring at least one of the at least one second high-band radio access point (131, 132, 133) to receive only information about said user equipment (140).

8. The method according to any of claims 1 to 7, comprising
receiving a request for establishing said wireless data link with said user equipment (140).

9. The method according to any of claims 1 to 8, comprising a transition of at least one high-band radio access point (131, 132, 133) from a first state to a second state, different from the first state, wherein the first state is selected from one of
- data transmission with said user equipment (140) ;
- hold available information about said user equipment (140);
- hold available information about said user equipment (140) and data addressed to said user equipment (140);
wherein the second state is selected from one of
- data transmission with user equipment (140);
- hold available information about said user equipment (140);
- hold available information about said user equipment (140) and data addressed to said user equipment (140).

10. The method according to any of claims 1 to 9, wherein for different user equipment (140), the configuration or state of the same high-band radio access point (131, 132, 133) is different.

11. A network node (110), operable to
configure at least one first high-band access point (131, 132, 133) of a plurality of high-band access points for wireless transmission of data addressed to a user equipment (140),
select at least one second high-band radio access point (131, 132, 133) other than said at least one first high-band radio access point (131, 132, 133) from the plurality of predetermined high-band radio access points,
configure said at least one second high-band access point (131, 132, 133) to hold available information about said user equipment (140) during data transmission between said user equipment (140) and said at least one first high-band radio access point (131, 132, 133).

12. A high-band radio access point (131, 132, 133), operable to
be configured as at least one first high-band radio access point (131, 132, 133) of a plurality of predetermined high-band radio access points for wireless data transmission to a user equipment (140),
transmit data addressed to said user equipment (140) when configured as said at least one first high-band radio access point (131, 132, 133),
be configured as at least one second high-band radio access point (131, 132, 133) of the plurality of predetermined high-band radio access points, to hold available information about said user equipment (140) during data transmission between said user equipment (140) and another high-band access point (131, 132, 133) configured as said at least one first high-band radio access point (131, 132, 133).

13. A computer program for wireless data transmission, wherein said computer program, when executed on a computer, causes the computer to perform the steps of the method according to any of claims 1 to 10.

## Amended claims

### Amended claims in accordance with Rule 137(2) EPC.

1. A method for wireless data transmission comprising:
configuring at least one first millimeter wave radio access point (131, 132, 133) of a plurality of predetermined millimeter wave radio access points for wireless data transmission to a user equipment (140),
transmitting data addressed to said user equipment (140) via said at least one first millimeter wave radio access point (131, 132, 133),
selecting at least one second millimeter wave radio access point (131, 132, 133) other than said at least one first millimeter wave radio access point (131, 132, 133) from the plurality of predetermined millimeter wave radio access points,
configuring said at least one second millimeter wave access point (131, 132, 133) to hold available context information about said user equipment (140) during data transmission between said user equipment (140) and said at least one first millimeter wave radio access point (131, 132, 133),
**characterized by** a transition of at least one millimeter wave radio access point (131, 132, 133) from a first state to a second state, different from the first state, wherein the first state is selected from one of
- data transmission with said user equipment (140) ;
- hold available context information about said user equipment (140);
- hold available context information about said user equipment (140) and data addressed to said user equipment (140);
wherein the second state is selected from one of
- data transmission with user equipment (140);
- hold available context information about said user equipment (140);
- hold available context information about said user equipment (140) and data addressed to said user equipment (140).

2. The method according to claim 1 comprising:
configuring said at least one second millimeter wave radio access point (131, 132, 133) for transmitting data addressed to said user equipment (140) via said at least one second millimeter wave radio access point (131, 132, 133) to said user equipment (140).

3. The method according to claim 1 or 2 comprising:
configuring said at least one second millimeter wave radio access point (131, 132, 133) to hold available context information about said user equipment (140) and to hold available data addressed to said user equipment (140).

4. The method according to claim 3 wherein the data held available by said at least one second millimeter wave radio access point (131, 132, 133) comprises a copy of data to be transmitted by said at least one first millimeter wave radio access point (131, 132, 133) addressed to said user equipment (140).

5. The method according to any of claims 1 to 4 comprising:
sending said data, addressed to said user equipment (140), to said at least one first millimeter wave radio access point (131, 132, 133) and said at least one second millimeter wave radio access point (131, 132, 133).

6. The method according to any of claims 1 to 5 comprising:
receiving said data, addressed to said user equipment (140), by said at least one second millimeter wave radio access point (131, 132, 133), holding available said data and forwarding said data to said user equipment (140) or not, depending on a current configuration of said at least one second millimeter wave radio access point (131, 132, 133).

7. The method according to any of claims 1 to 6 comprising:
configuring at least one of the at least one second millimeter wave radio access point (131, 132, 133) to receive only context information about said user equipment (140).

8. The method according to any of claims 1 to 7, comprising
receiving a request for establishing said wireless data link with said user equipment (140).

9. The method according to any of claims 1 to 8, wherein for different user equipment (140), the configuration or state of the same millimeter wave radio access point (131, 132, 133) is different.

10. A network node (110), operable to
configure at least one first millimeter wave access point (131, 132, 133) of a plurality of millimeter wave access points for wireless transmission of data addressed to a user equipment (140),
select at least one second millimeter wave radio access point (131, 132, 133) other than said at least one first millimeter wave radio access point (131, 132, 133) from the plurality of predetermined millimeter wave radio access points,
configure said at least one second millimeter wave access point (131, 132, 133) to hold available context information about said user equipment (140) during data transmission between said user equipment (140) and said at least one first millimeter wave radio access point (131, 132, 133)
**characterized in that**
the network node (110) is operable to transition at least one millimeter wave radio access point (131, 132, 133) from a first state to a second state, different from the first state, wherein the first state is selected from one of
- data transmission with said user equipment (140) ;
- hold available context information about said user equipment (140);
- hold available context information about said user equipment (140) and data addressed to said user equipment (140);
wherein the second state is selected from one of
- data transmission with user equipment (140);
- hold available context information about said user equipment (140);
- hold available context information about said user equipment (140) and data addressed to said user equipment (140).

11. A millimeter wave radio access point (131, 132, 133), operable to
be configured as at least one first millimeter wave radio access point (131, 132, 133) of a plurality of predetermined millimeter wave radio access points for wireless data transmission to a user equipment (140),
transmit data addressed to said user equipment (140) when configured as said at least one first millimeter wave radio access point (131, 132, 133),
be configured as at least one second millimeter wave radio access point (131, 132, 133) of the plurality of predetermined millimeter wave radio access points, to hold available context information about said user equipment (140) during data transmission between said user equipment (140) and another millimeter wave access point (131, 132, 133) configured as said at least one first millimeter wave radio access point (131, 132, 133)
**characterized in that** the millimeter wave radio access point is configurable for a transition from a first state to a second state, different from the first state, wherein the first state is selectable from one of
- data transmission with said user equipment (140) ;
- hold available context information about said user equipment (140);
- hold available context information about said user equipment (140) and data addressed to said user equipment (140);
wherein the second state is selectable from one of
- data transmission with user equipment (140);
- hold available context information about said user equipment (140);
- hold available context information about said user equipment (140) and data addressed to said user equipment (140).

12. A computer program for wireless data transmission, wherein said computer program, when executed on a computer, causes the computer to perform the steps of the method according to any of claims 1 to 9.
